# EUROPÄISCHE PATENTANMELDUNG

(11) **EP 2 040 092 A1**
(43) Veröffentlichungstag der Anmeldung: **25.03.2009**
(21) Anmeldenummer: 08104816.7
(22) Anmeldetag: 22.07.2008
(51) Int. Cl.: G01S 7/481, G02B 27/64, G02B 27/20

(54) **Vorrichtung mit einer Lichtaussendeeinrichtung**

(30) Priorität: 20.09.2007 DE 102007044810
(71) Anmelder: ROBERT BOSCH GMBH, 70442 Stuttgart (DE)
(72) Erfinder: Koeder, Thilo, 70839 Gerlingen (DE); Stellmann, Georg, 71642 Ludwigsburg (DE)

(57) **Zusammenfassung**

Eine vorrichtung umfassend ein Gehäuse und eine Lichtaussendeeinrichtung mit einer Lichtquelle zum Emittieren eines Lichtsignals, wobei die Vorrichtung eine Dämpfungseinrichtung aufweist, die derart ausgebildet ist, dass hochfrequente Anteile von Bewegungen des Gehäuses zumindest teilweise eliminiert werden, bevor diese auf die Lichtquelle übertragen werden.

## Beschreibung

Die vorliegende Erfindung betrifft eine Vorrichtung mit einem Gehäuse und einer Lichtaussendeeinrichtung, wobei letztere eine Lichtquelle zum Emittieren eines Lichtsignals aufweist.

### Stand der Technik

Derartige Vorrichtungen sind im Stand der Technik in verschiedensten Ausgestaltungen bekannt. Beispiele reichen von so genannten Laserpointern, die meist als Anzeigehilfen bei Vorträgen verwendet werden, bis hin zu Distanzmessvorrichtungen, bei denen die Ermittlung von Entfernungen auf der Laufzeit- oder Phasenmessung von Lichtwellen basiert. Dabei wird Licht von einer Lichtquelle des Messgeräts ausgesendet, an dem entfernt gelegenen Messobjekt reflektiert, die reflektierte Welle von dem Messgerät mit Hilfe einer Empfangseinrichtung empfangen und mit der ausgesendeten Welle mittels einer in dem Gerät vorgesehenen Auswerteeinrichtung verglichen. Ferner sind Distanzmessvorrichtungen bekannt, die auf einer Triangulation basieren. Bei diesen Vorrichtungen wird mittels einer in der Nähe der Lichtquelle angebrachten Empfangseinrichtung der Winkel des empfangenen reflektierten Lichtsignals zum von der Lichtquelle ausgesendeten Lichtsignal erfasst. Der Vorteil eines solchen Verfahrens besteht darin, dass der Winkel sehr einfach mittels optischer Abbildung auf einen Sensor bestimmt werden kann.

Ein Nachteil von Vorrichtungen der zuvor beschriebenen Art besteht allerdings darin, dass sich hochfrequente Bewegungsanteile von Bewegungen, welche das Gehäuse der Vorrichtung ausführt, sehr störend auf das von der Vorrichtung hervorgebrachte Ergebnis auswirken können.

In Bezug auf Laserpointer ist es beispielsweise für den Betrachter irritierend, wenn Zitterbewegungen der Hand eines Vortragenden über den Laserpointer auf eine Leinwand übertragen werden.

Bei Distanzmessvorrichtungen können die negativen Auswirkungen hochfrequenter Bewegungsanteile noch schwerwiegendere Folgen haben, da insbesondere beim Messen größerer Distanzen bereits kleiner Schwankungen der Distanzmessvorrichtungen zu großen Messfehlern führen können.

Bei dem zuletzt genannten Fall kann Abhilfe durch den Einsatz von Stativen geschaffen werden, die ungewollte Bewegungen der Distanzmessvorrichtung verhindern. Solche Stative sind jedoch nicht immer geeignet, wie beispielsweise im Falle von Laserpointern.

Ausgehend von diesem Stand der Technik ist es eine Aufgabe der vorliegenden Erfindung, eine Vorrichtung der eingangs genannten Art mit einem alternativen Aufbau zu schaffen, welche die beschriebenen Probleme zumindest teilweise löst.

### Offenbarung der Erfindung

Diese Aufgabe wird gemäß der vorliegenden Erfindung durch eine Vorrichtung nach Anspruch 1 gelöst. Die Unteransprüche beziehen sich auf individuelle Ausgestaltungen der vorliegenden Erfindung.

Die Vorrichtung gemäß der Erfindung umfasst ein Gehäuse und eine Lichtaussendeeinrichtung mit einer Lichtquelle zum Emittieren eines Lichtsignals. Optional kann die Vorrichtung in Abhängigkeit von ihrem Verwendungszweck ferner eine Empfangseinrichtung zum Empfangen des emittierten Lichtsignals aufweisen, das an einem Objekt oder an einer Person reflektiert wurde.

Bei der Vorrichtung handelt es sich bevorzugt um ein Anzeigegerät, wie beispielsweise der eingangs genannte Laserpointer, oder um ein Messgerät, so zum Beispiel eine Distanzmessvorrichtung.

Die Art der eingesetzten Lichtquelle richtet sich grundsätzlich nach dem Verwendungszweck, den die Vorrichtung erfüllen soll. Bevorzugt handelt es sich bei der Lichtquelle jedoch um einen Laser oder um zumindest eine LED. Natürlich können aber auch andere Lichtquellen eingesetzt werden, wie beispielsweise einfache Glühbirnen oder dergleichen, die ggf. mit einer geeigneten Optik zusammenwirken.

Erfindungsgemäß umfasst die Vorrichtung eine Dämpfungseinrichtung, die derart ausgebildet ist, dass hochfrequente Anteile von Bewegungen des Gehäuses zumindest teilweise eliminiert werden, bevor diese auf die Lichtquelle übertragen werden. Auf diese Weise können beabsichtigte Schwenkbewegungen der Vorrichtung normal durchgeführt werden, wohingegen eine negative Beeinträchtigung des mit der Vorrichtung zu erzielenden Ergebnisses aufgrund ungewollter hochfrequenter Bewegungsanteile verhindert wird. Hochfrequente Bewegungsanteile sind vorliegend solche Bewegungen, die beispielsweise durch ein Zittern einer die Vorrichtung haltenden Hand oder durch eine vibrierende Umgebung, wie zum Beispiel in Maschinenparks oder dergleichen, verursacht werden.

Gemäß einer einfachen Ausgestaltung der vorliegenden Erfindung ist die Dämpfungseinrichtung bevorzugt eine so genannte passive Dämpfungseinrichtung. Bei einer Variante einer solchen passiven Dämpfungseinrichtung ist die Lichtquelle innerhalb des Gehäuses derart aufgehängt, dass sie nur noch sehr träge auf Bewegungen von außen reagiert. Hier findet also zumindest teilweise eine Entkopplung der Lichtquelle von dem Gehäuse statt. Das dazu eingesetzte Feder-Dämpfersystem ist dabei derart ausgelegt, dass hochfrequente Bewegungsanteile herausgefiltert, normal schnelle Bewegungen aber weiterhin zugelassen werden. Als Dämpfungsmaterial wird dabei vorteilhaft eine zähflüssige Flüssigkeit, insbesondere ein Gel verwendet, in dem die Lichtquelle aufgenommen ist.

Gemäß einer konstruktiv komplexeren Ausgestaltung der vorliegenden Erfindung ist die Dämpfungseinrichtung eine so genannte aktive Dämpfungseinrichtung. Bei einer solchen aktiven Dämpfungseinrichtung werden auf das Gehäuse bzw. auf die Lichtquelle ausgeübte hochfrequente Bewegungen mit Hilfe einer geeigneten Sensorik, wie beispielsweise intelligente adaptronische Bauteile, erkannt und ihnen kontrolliert entgegengewirkt, beispielsweise durch initiieren eine Gegenschwingung oder dergleichen.

### Ausführungsbeispiel

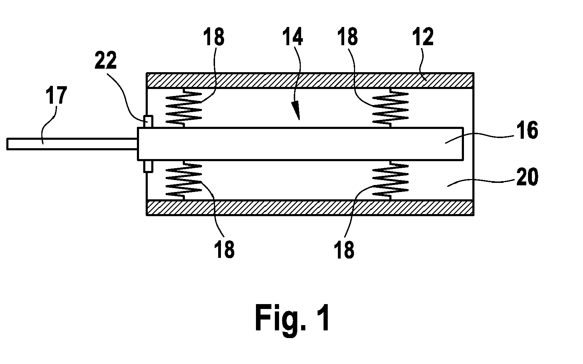

Nachfolgend wird die vorliegende Erfindung anhand eines nicht einschränkenden Ausführungsbeispiels genauer unter Bezugnahme auf die Zeichnung beschrieben, die schematisch eine Vorrichtung mit einer passiven Dämpfungseinrichtung zeigt.

Die Zeichnung zeigt schematisch eine Vorrichtung 10. Diese Vorrichtung 10 umfasst ein Gehäuse 12 und eine in diesem angeordnete Lichtaussendeeinrichtung 14 mit einer Lichtquelle 16 in Form einer Laserdiode, die ein Lichtsignal 17 emittiert. Die Lichtquelle 16 ist dabei mit Hilfe von Federelementen 18 in einer im Wesentlichen mittigen Grundposition innerhalb des Gehäuses 12 gehalten. Zur Dämpfung der Lichtquelle in Bezug auf hochfrequente Bewegungsanteile, die auf das Gehäuse 12 ausgeübt werden, ist der Innenraum des Gehäuses mit einer zähflüssigen Flüssigkeit 20 in Form eines Gels gefüllt, das die Lichtquelle 16 im Wesentlichen vollständig umgibt. Auf diese Weise wird eine Aufhängung der Lichtquelle 16 realisiert, die sehr träge auf Bewegungen von außen reagiert. Das Ferder-Dämpfer-System mit den Federelementen 18 und der zähflüssigen Flüssigkeit 20 ist dabei derart aufeinander abgestimmt, dass hochfrequente Bewegungsanteile von Bewegungen des Gehäuses 12 großteils herausgefiltert, normal schnelle Bewegungen jedoch in bekannter Weise zugelassen werden. Dasjenige Ende der Lichtquelle 16, aus dem das Lichtsignal austritt, erstreckt sich durch die Wandung des Gehäuses 12, wobei der Zwischenraum zwischen der Lichtquelle 16 und dem Gehäuse 12 mit Hilfe einer Dichtung 22 abgedichtet ist. Diese Dichtung 22 ist flexibel ausgebildet, so dass ein bestimmtes Bewegungsmaß der Lichtquelle 16 innerhalb des Gehäuses 12 zugelassen wird. Die Lichtquelle 16 ist also nicht starr an dem Gehäuse 12 gehalten.

Wie es in der Zeichnung schematisch dargestellt ist, kann eine Vorrichtung 10 mit einem Gehäuse 12 und einer ein Lichtsignal emittierenden Lichtquelle 16 in einfachster Art und Weise mit einer passiven Dämpfungseinrichtung ausgestattet werden, die hochfrequente Anteile von Bewegungen des Gehäuses 12 zumindest teilweise eliminiert, bevor diese auf die Lichtquelle 16 übertragen werden.

Es sollte klar sein, dass die zuvor beschriebene Ausführungsform in keiner Weise als einschränkend zu verstehen ist. Vielmehr sind eine Vielzahl von Änderungen und Modifikationen möglich, die in den Schutzbereich der vorliegenden Erfindung fallen, der in den beiliegenden Ansprüchen definiert ist.

So kann die in der Figur dargestellt Vorrichtung 10 auch eine Optik aufweisen, die in an sich bekannter Weise mit der Lichtquelle 16 zusammenwirkt.

Auch kann, wie es eingangs beschrieben wurde, die passive Dämpfungseinrichtung durch eine aktive Dämpfungseinrichtung ersetzt werden, bei der beispielsweise so genannte intelligente adaptronische Bauteile hochfrequente Schwingungen erkennen und ihnen kontrolliert entgegenwirken. Möglich wird dies dadurch, dass aktive Materialien, wie zum Beispiel piezoelektrische oder magnetostriktive Werkstoffe in die Bauteile der Vorrichtung integriert werden. Diese besitzen sensorische Eigenschaften und erfassen hochfrequente Schwingungen. Die erfassten hochfrequenten Schwingungen werden dann einer Rechner- bzw. Reglereinheit gemeldet. Nachdem eine störende Schwingung erfasst und bewertet wurde, leitet die Rechner- bzw. Reglereinheit ein frequenz-, amplituden- und phasenangepasstes Signal an das aktive Material, das zugleich aktorische Eigenschaften besitzt. Das Aktorsignal wirkt der Störung gezielt entgegen und verhindert, dass sich die Störung auf die Lichtquelle ausbreitet. Das aktive System bewirkt also wie die passive Dämpfungseinrichtung eine Dämpfung oder Entkopplung der Lichtquelle, wobei die aktive Dämpfung jedoch normalerweise effektiver ist. Da aktive Dämpfungseinrichtungen gegenüber passiven Dämpfungseinrichtungen in der Regel kostspieliger sind, bietet sich ihr Einsatz insbesondere bei teuren Messgeräten an.

Handelt es sich bei der Vorrichtung 10 um eine Messeinrichtung, so umfasst diese normalerweise ferner eine Empfangseinrichtung zum Empfangen eines von der Lichtquelle ausgesendeten und an einem Objekt reflektierten Lichtsignals. Je nach Aufbau und Verwendung der Vorrichtung kann es erforderlich sein, dass die Lichtquelle und die Empfangseinrichtung stets konstant relativ zueinander positioniert bleiben, so beispielsweise bei triangulations-basierten Messeinrichtungen. In diesem Fall sollte die Empfangseinrichtung in gleicher Weise wie die Lichtquelle von dem Gehäuse entkoppelt werden. Hierzu können die Lichtquelle und die Empfangseinrichtung beispielsweise einfach starr aneinander befestigt werden, so dass die Dämpfung der Empfangseinrichtung über die Dämpfung der Lichtquelle erfolgt.

## Patentansprüche

1. Vorrichtung (10) umfassend ein Gehäuse (12) und eine Lichtaussendeeinrichtung (14) mit einer Lichtquelle (16) zum Emittieren eines Lichtsignals (17),
**dadurch gekennzeichnet, dass**
die Vorrichtung (10) eine Dämpfungseinrichtung (18, 20) aufweist, die derart ausgebildet ist, dass hochfrequente Anteile von Bewegungen des Gehäuses (12) zumindest teilweise eliminiert werden, bevor diese auf die Lichtquelle (16) übertragen werden.

2. Vorrichtung (10) nach Anspruch 1, **dadurch gekennzeichnet, dass** diese ein Messgerät ist.

3. Vorrichtung (10) nach einem der vorhergehenden Ansprüche, **dadurch gekennzeichnet, dass** diese ein Anzeigegerät ist.

4. Vorrichtung (10) nach einem der vorhergehenden Ansprüche, **dadurch gekennzeichnet, dass** die Lichtquelle (16) zumindest ein LED aufweist.

5. Vorrichtung (10) nach einem der vorhergehenden Ansprüche, **dadurch gekennzeichnet, dass** die Lichtquelle (16) wenigstens einen Laser aufweist.

6. Vorrichtung (10) nach einem der vorhergehenden Ansprüche, **dadurch gekennzeichnet, dass** die Lichtaussendeeinrichtung (14) eine Optik aufweist.

7. Vorrichtung (10) nach einem der vorhergehenden Ansprüche, **dadurch gekennzeichnet, dass** die Dämpfungseinrichtung (18, 20) eine passive Dämpfungseinheit umfasst.

8. Vorrichtung (10) nach Anspruch 7, **dadurch gekennzeichnet, dass** die passive Dämpfungseinheit eine zähe Flüssigkeit (20) und/oder ein Gel aufweist, in der die Lichtquelle (16) angeordnet ist.

9. Vorrichtung (10) nach einem der vorhergehenden Ansprüche, **dadurch gekennzeichnet, dass** die Dämpfungseinrichtung eine aktive Dämpfungseinheit aufweist.
